# EUROPÄISCHE PATENTSCHRIFT

(11) **EP 0 943 488 B1**
(45) Veröffentlichungstag und Bekanntmachung des Hinweises auf die Patenterteilung: **17.08.2005**
(21) Anmeldenummer: 99102109.8
(22) Anmeldetag: 03.02.1999
(51) Int. Cl.: B60N 2/36, B60R 5/04

(54) **Rücksitzbank eines Personenkraftwagens**
Rear seat bench for a private car
Banquette arrière d'une voiture particulière

(30) Priorität: 18.03.1998 DE 19811847
(43) Veröffentlichungstag der Anmeldung: 22.09.1999
(73) Patentinhaber: Bayerische Motoren Werke Aktiengesellschaft, 80788 München (DE); Wilhelm Karmann GmbH, 49084 Osnabrück (DE)
(72) Erfinder: Stubenberger, Andreas, 85716 Unterschleissheim (DE); Brandt, Armin, 33428 Harsewinkel (DE); Ehrbar, Günter, 82110 Germering (DE)

(56) Entgegenhaltungen:
- EP-A- 0 899 158
- DE-A- 3 308 495
- DE-A- 3 602 298
- DE-A- 3 729 837

## Beschreibung

Die Erfindung betrifft eine Rücksitzbank eines Personenkraftwagens mit einer in Fahrzeuglängsrichtung gegenüber dem Sitzpolster verschiebbaren Rückenlehne sowie mit einer hieran befestigten Laderaumverkleidung für den hinter der Rücksitzbank vorgesehenen, durch karosseriefeste Wandabschnitte begrenzten Laderaum und geht aus von der DE 36 02 298 C2.

Zur Vergrößerung des sich üblicherweise hinter der Rücksitzbank eines Personenkraftwagens befindenden Laderaumes kann deren Rückenlehne entweder umgeklappt werden, wie dies in vielen der heute üblichen Personenkraftwagen möglich ist, oder sie kann in Fahrtrichtung des Personenkraftwagens, d.h. in Fahrzeuglängsrichtung bevorzugt im wesentlichen direkt hinter die Vordersitze des Personenkraftwagens verschoben werden. Die letztgenannten Variante hat dabei den Vorteil, daß in der Rückenlehne vorgesehene Kopfstützen, die bei einer Verschwenkbewegung zumeist mit den Vordersitzen kollidieren würden, nicht entfernt werden müssen.

Ein Personenkraftwagen mit einer derartigen Rücksitzbank ist in der oben genannten DE 36 02 298 C2 gezeigt, wobei an der Rückseite der Rückenlehne ein Faltenbalg befestigt ist, der in der den Laderaum vergrößernden Position der Rückenlehne als Laderaumverkleidung fungiert. Ein solcher Faltenbalg weist jedoch mehrere Nachteile auf. So ist eine Beschädigung desselben durch scharfkantiges Ladegut nicht auszuschließen, darüber hinaus ist der Faltenbalg nicht in der Lage, schweres Ladegut zu tragen. Ferner können kleinere Gepäckstücke oder dergleichen zwischen den zusammengeschobenen Falten des Faltenbalges, d.h. wenn sich die Rückenlehne in der das Sitzpolster der Rücksitzbank freigebenden Position befindet, eingeklemmt werden.

DE-A-3 729 837 zeigt eine Rücksitzbank gemäß dem Oberbegriff des Anspruchs 1.

Eine Abhilfemaßnahme für diese geschilderte Problematik aufzuzeigen, ist Aufgabe der vorliegenden Erfindung.
Die Lösung dieser Aufgabe ist dadurch gekennzeichnet, daß die Laderaumverkleidung aus einem starren Bodenteil sowie starren Seitenteilen besteht, die in der das Sitzpolster freigebenden Position der Rückenlehne die jeweiligen nicht verschiebbaren, karosseriefesten Laderaum-Wandabschnitte bündig zumindest teilweise überdecken und
ein bezüglich des Laderaumes von der Laderaumverkleidung verdeckter Verstellantrieb für die Verschiebebewegung der Rückenlehne, der in Form einer Gewindespindel oder eines Bürstenkabels ausgebildet ist, die/das von einem bevorzugt elektrischen Hilfsmotor angetrieben wird.

Mit den erfindungsgemäßen Merkmalen erhält man somit sowohl in den beiden möglichen Extrempositionen der Rückenlehne als auch in deren Zwischenpositionen einen optimal verkleideten und dabei jeweils stets nach oben hin bis zum Fahrzeugdach offenen Laderaum. Insbesondere gilt dies, wenn die an der Rückenlehne befestigte Laderaumverkleidung die nicht verschiebbaren, karosseriefesten Laderaum-Wandabschnitte bündig überdeckt, d.h. im wesentlichen auf diesen aufliegt, da dann die entsprechende gestaltete Laderaumverkleidung teleskopartig ausgebildet ist. Dies hat den Vorteil, daß der Laderaum als solches auf elegante Weise durch Verschieben der Rückenlehne vergrößert werden kann, ohne daß dabei Ladegut in irgendwelche seitliche Spalten fällt oder das Sitzpolster der Rücksitzbank verschmutzt werden kann. Auch können im Laderaum befindliche Gepäckstücke nicht eingeklemmt werden, was insbesondere bei einer Rückschiebebewegung der Rücksitzbank von besonderer Bedeutung ist. Durch ein derartiges Zurückschieben der Rückenlehne können im übrigen Gepäckstücke, die sich direkt hinter derselben auf dem Bodenteil befinden, in Griffnähe, d.h. von hinterhalb des Personenkraftwagens ergreifbar, herangefahren werden, und dies mit elektromotorischer Unterstützung.

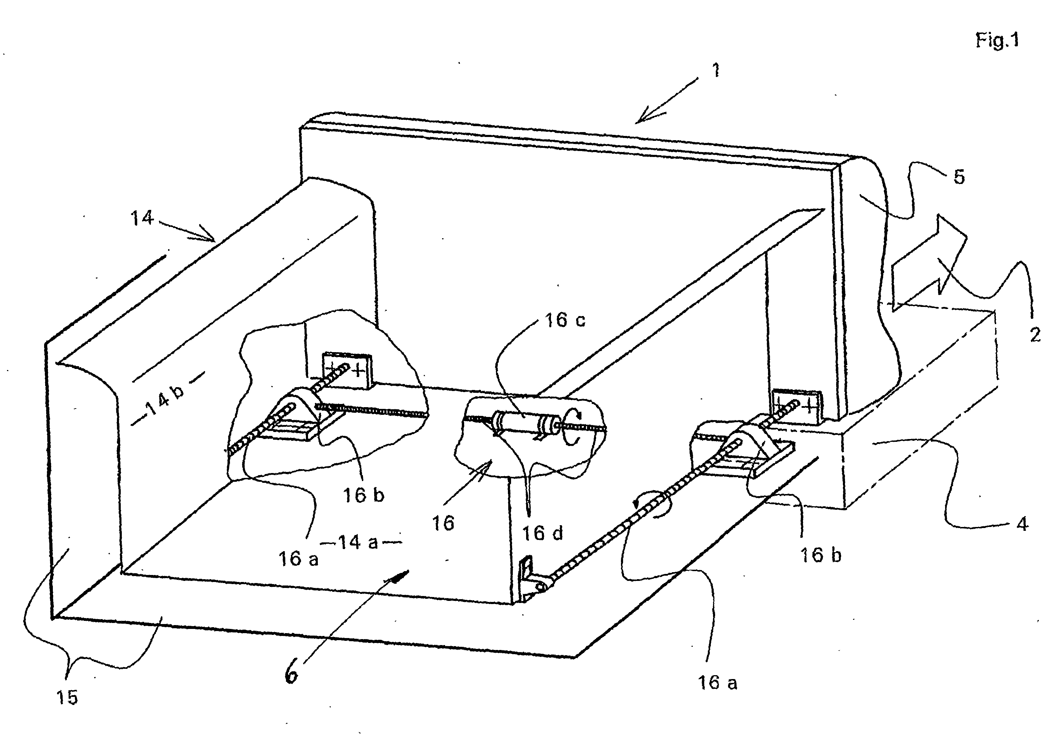

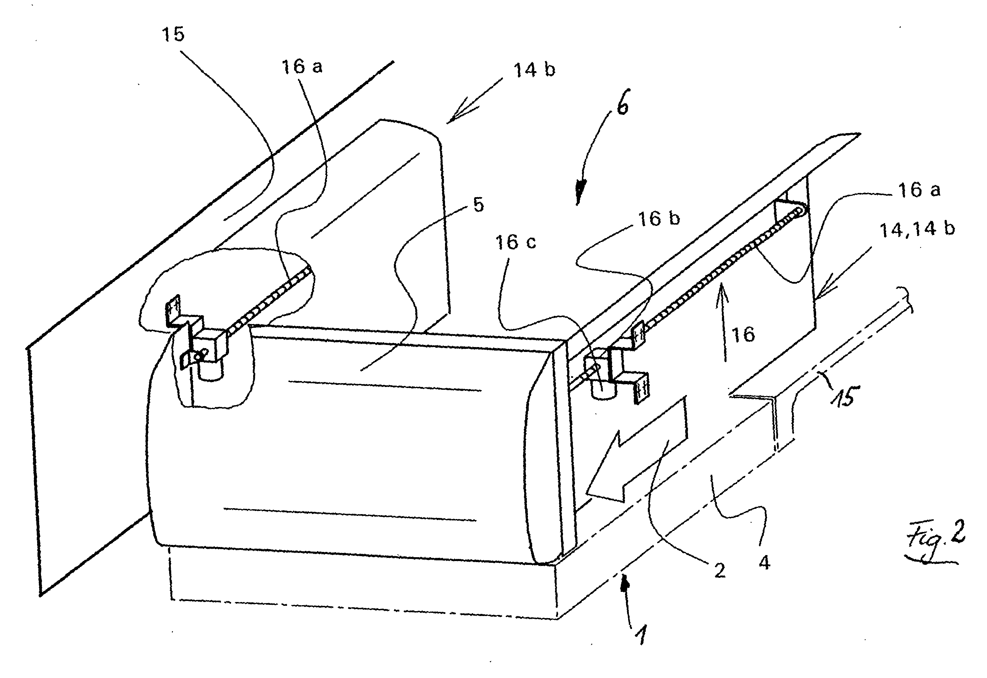

Näher erläutert wird die Erfindung anhand bevorzugter Ausführungsbeispiele, wobei in den beigefügten Figuren 1 und 2 jeweils eine vereinfachte Perspektivansicht einer erfindungsgemäßen Rücksitzbank-Rückenlehne dargestellt ist. Dabei sind gleiche Bauelemente stets mit den gleichen Bezugsziffern bezeichnet.

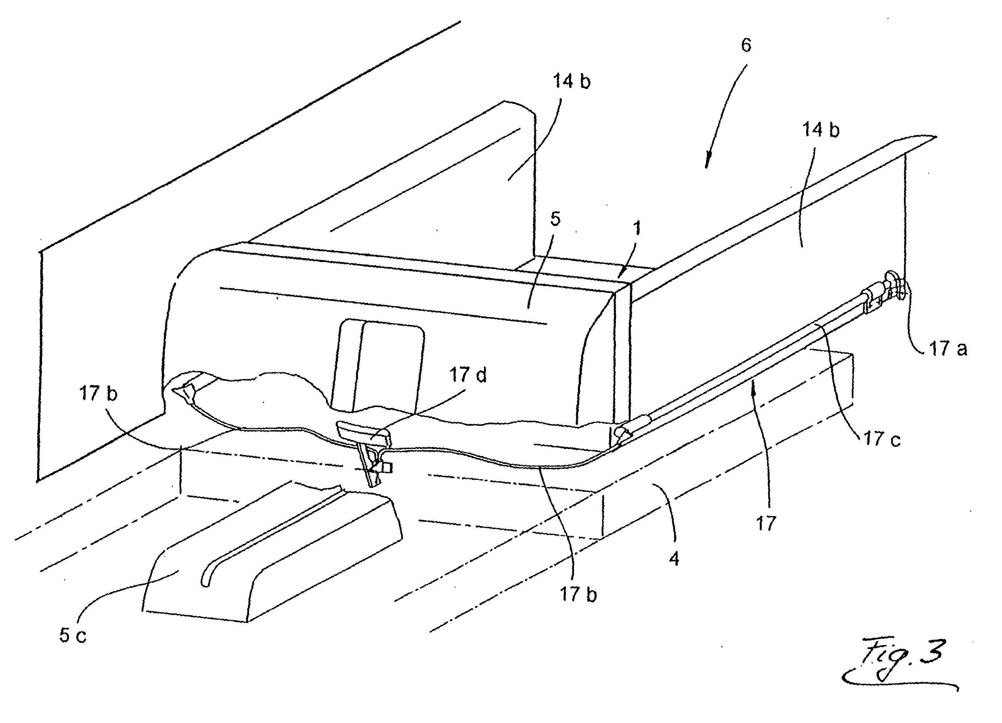

Figur 3 zeigt eine Rücksitzbank gemäß dem Stand der Technik

Mit der Bezugsziffer 1 ist eine Rücksitzbank eines Personenkraftwagens bezeichnet, die neben einem üblichen Sitzpolster 4 eine Rückenlehne 5 aufweist, welche in Fahrtrichtung 2 des Personenkraftwagens (d. h in bzw. gegen Pfeilrichtung 2) gegenüber dem Sitzpolster 4 verschiebbar ist. Ein hinter der Rücksitzbank 1 bzw. hinter der Rückenlehne 5 befindlicher Laderaum 6 des Personenkraftwagens, der von mit der Bezugsziffer 15 bezeichneten karosseriefesten Laderaum-Wandabschnitten (Karosserieboden und Seitenwände) begrenzt wird, kann somit vergrößert werden, wenn die Rückenlehne 5 ausgehend von der in Figur 1 dargestellten üblichen, das Sitzpolster 4 freigegebenen Position in die in Figur 2 gezeigte, bezüglich des Sitzpolsters 4 vordere Position verschoben wird.

Wie erkennbar, zeigt nämlich Figur 1 eine perspektivische Ansicht von hinten auf die Rücksitzbank 1, d. h. eine Ansicht vom Laderaum 6 aus, während die Figuren 2, 3 eine Perspektivansicht von vorne auf die Rücksitzbank 1 zeigen, d.h. eine Ansicht aus Richtung der Vordersitze des Personenkraftwagens.

An der Rückseite der Rückenlehne 5 ist eine in ihrer Gesamtheit mit 14 bezeichnete Laderaumverkleidung befestigt, welche aus einem starren Bodenteil 14a sowie linksseitig und rechtsseitig jeweils einem starren Seitenteil 14b besteht. Diese Laderaumverkleidung 14 überdeckt in der sogenannten hinteren Position der Rückenlehne 5, in welcher diese das Sitzpolster 4 freigibt, die nicht verschiebbaren, karosseriefesten Laderaum-Wandabschnitte 15 bündig zumindest teilweise. In der gemäß Pfeilrichtung 2 vorgeschobenen Position der Rückenlehne 5 überdeckt das Bodenteil 14a der Laderaumverkleidung 14 das Sitzpolster 4 und schützt dieses somit vor Verschmutzung und Beschädigung durch das in den dann vergrößerten Laderaum 6 eingebrachte Ladegut. In gleicher Weise schützen die beiden Seitenteile 14b die Fahrzeuginnenraum-Verkleidung bzw. die Verkleidung der ggf. vorgesehen hinteren Seitentüren des Personenkraftwagens vor Beschädigung und Verschmutzung. Ferner kann durch die wie ersichtlich wannenartige Gestaltung der Laderaumverkleidung 14, welche lediglich nach oben und nach hinten hin, d.h. zum eigentlichen Laderaum 6 offen ist, kein Ladegut, welches sich innerhalb dieser Laderaumverkleidung 14 befindet, seitlich oder nach vorne hin herausfallen.

Zum Verschieben der Rückenlehne 5 inklusive der daran befestigten Laderaumverkleidung 14 in bzw. gegen Pfeilrichtung 2 ist ein in seiner Gesamtheit mit 16 bezeichneter erfindungsgemäß angeordneter Verstellantrieb vorgesehen. Dieser Verstellantrieb 16 wird zum Laderaum 6 hin von der Laderaumverkleidung 14 verdeckt und ist bei den beiden Ausführungsbeispielen nach den Figuren 1, 2 als Gewindespindel 16a ausgebildet, wobei jeweils eine derartige Gewindespindel 16a außenseitig und beidseitig der verschiebbaren Rückenlehne 5 hinter den Seitenteilen 14b der Laderaumverkleidung 14 angeordnet ist. Mit ihren beiden Enden ist die Gewindespindel 16a dabei an der Rückenlehne 5 sowie am freien Ende der Laderaumabdeckung 14 befestigt und durch ein an der Karosserie des Personenkraftwagens auf nicht näher dargestellte Weise befestigtes Gewinde-Fixteil 16b geführt. Wird nun die Gewindespindel 16a um ihre Längsachse in Rotation versetzt, so schraubt sie sich in bekannter Weise durch das Gewinde-Fixteil 16b und verschiebt somit entsprechend ihrer Rotationsrichtung die Rückenlehne 5 mit der Laderaumverkleidung 14 in bzw. gegen Pfeilrichtung 2.

In Rotation versetzt werden kann die Gewindespindel 16a durch einen Hilfsmotor 16c. Beim Ausführungsbeispiel nach Figur 2 ist jeder der beiden Gewindespindeln 16a ein eigener Hilfsmotor 16c zugeordnet, der bevorzugt karosseriefest befestigt ist und bei diesem Ausführungsbeispiel direkt neben dem Gewinde-Fixteil 16b angeordnet ist. Beim Ausführungsbeispiel nach Figur 1 ist den beiden Gewindespindeln 16a ein gemeinsamer Hilfsmotor 16c zugeordnet, der zwei orthogonal zu den Gewindespindeln 16a angeordnete Antriebsstangen 16d in Rotation versetzt, von denen jede mit einer Gewindespindel 16a kämmt.

Bei der Darstellung des Standes der Technik nach Figur 3 ist kein Verstellantrieb 16 dargestellt, wodurch verdeutlicht werden soll, daß die Rückenlehne 5 inklusive der daran befestigten Laderaumabdeckung 14 einer Rücksitzbank 1 auch manuell verschoben werden kann. Dafür ist in dieser Figurendarstellung eine Verriegelungsvorrichtung 17 gezeigt, mit Hilfe derer die verschiebbare Rückenlehne 5 zumindest in ihren beiden Endpositionen arretierbar ist. Hierzu kann ein auf geeignete Weise betätigbares Verriegelungselement 17a mit einem nicht gezeigten karosseriefesten Aufnahmeelement in bzw. außer Eingriff gebracht werden. In der in Figur 3 gezeigten Anordnung erfolgt die Betätigung des Verriegelungselementes 17a, welches beidseitig außenseitig der Rückenlehne und/oder Laderaumverkleidung 14 angeordnet ist, über jeweils einen Seilzug 17b sowie einer sich daran anschließenden Betätigungsstange 17c, wobei das dem Verriegelungselement 17a bzw. der Betätigungsstange 17c abgewandte Ende des Seilzuges 17b an einem von Hand umklappbaren Betätigungshebel 17d befestigt ist. Dieser Betätigungshebel 17d ist dabei im unteren, dem Sitzpolster 4 zugewandten Randbereich des Rückenlehne 5 an letzterer befestigt, und zwar hinter einer aus der Rükkenlehne 5 herausklappbaren Mittelarmlehne 5c.

Jedoch kann dies sowie eine Vielzahl weiterer Details auch abweichend vom gezeigten Ausführungsbeispiel gestaltet sein. So kann der Verstellantrieb 16 anstelle der Gewindespindeln 16a auch Bürstenkabel aufweisen, die bspw. von einem einzigen Hilfsmotor 16c in Rotation versetzt werden, wobei die Anordnung ähnlich der in Fig. 1 dargestellten getroffen sein kann. Ferner ist es möglich, auch nur eine einzige Gewindespindel 16a oder dgl. vorzusehen, und zwar dann bevorzugt zentral unterhalb des Bodenteiles 14a der Laderaumverkleidung 14. Darüber hinaus sind weitere vorteilhafte Ausgestaltungen der Rücksitzbank 1 bzw. der Rückenlehne 5 möglich, die hier nicht figürlich dargestellt sind, jedoch dennoch kurz erläutert werden sollen. So kann beispielsweise rückseitig an der Rückenlehne 5 eine als Rollo ausgebildete Laderaumabdeckung befestigt sein. Ferner kann eine zumindest teilweise in der Rückenlehne 5 versenkbare Kopfstützvorrichtung vorgesehen sein, die im aus der Rückenlehne 5 ausgefahrenen Zustand als Trennwand zum hinter der Rückenlehne 5 liegenden Laderaum 6 fungiert.

### Bezugszeichenliste:

- 1: Rücksitzbank
- 2: Fahrtrichtung / Pfeilrichtung
- 4: Sitzpolster
- 5: Rückenlehne
- 5c: Mittelarmlehne
- 6: Laderaum
- 14: Laderaumverkleidung
- 14a: Bodenteil von 14
- 14b: Seitenteil von 14
- 15: karosseriefeste Laderaum-Wandabschnitte
- 16: Verstellantrieb
- 16a: Gewindelspindel
- 16b: Gewinde-Fixteil
- 16c: Hilfsmotor
- 16d: Antriebsstange
- 17: Verriegelungsvorrichtung
- 17a: Verriegelungselement
- 17b: Seilzug
- 17c: Betätigungsstange
- 17d: Betätigungshebel

## Patentansprüche

1. Rücksitzbank eines Personenkraftwagens mit einer in Fahrzeuglängsrichtung (2) gegenüber dem Sitzpolster (4) verschiebbaren Rückenlehne (5) sowie mit einer hieran befestigten Laderaumverkleidung (14) für den hinter der Rücksitzbank (1) vorgesehenen, durch karosseriefeste Wandabschnitte (15) begrenzten Laderaum (6), wobei die Laderaumverkleidung (14) aus einem starren Bodenteil (14a) sowie starren Seitenteilen (14b) besteht, die in der das Sitzpolster (4) freigebenden Position der Rückenlehne (5) die jeweiligen nicht verschiebbaren, karosseriefesten Laderaum-Wandabschnitte (15) bündig zumindest teilweise überdecken,
**gekennzeichnet durch** einen bezüglich des Laderaumes (6) von der Laderaumverkleidung (14) verdeckten Verstellantrieb (16) für die Verschiebebewegung der Rückenlehne (5), der in Form einer Gewindespindel (16a) oder eines Bürstenkabels ausgebildet ist, die/das von einem bevorzugt elektrischen Hilfsmotor (16c) angetrieben wird.

2. Rücksitzbank nach Anspruch 1,
**dadurch gekennzeichnet, daß** außen beidseitig der verschiebbaren Rückenlehne (5) jeweils ein Verstellantrieb (16) vorgesehen ist.

3. Rücksitzbank nach Anspruch 2,
**dadurch gekennzeichnet, daß** den beiden Verstellantrieben (16, 16a) ein gemeinsamer Hilfsmotor (16c) zugeordnet ist.

4. Rücksitzbank nach einem der vorangegangenen Ansprüche,
**gekennzeichnet durch** eine Verriegelungsvorrichtung zum Arretieren der verschiebbaren Rückenlehne (5) in ihren beiden Endpositionen.

5. Rücksitzbank nach einem der vorangegangenen Ansprüche,
**gekennzeichnet durch** eine rückseitig an der Rückenlehne (5) befestigte und als Rollo ausgebildete Laderaumabdeckung.

6. Rücksitzbank nach einem der vorangegangenen Ansprüche,
**gekennzeichnet durch** eine zumindest teilweise in der Rückenlehne (5) versenkbare Kopfstützvorrichtung, die im aus der Rückenlehne (5) ausgefahrenen Zustand als Trennwand zum hinter der Rückenlehne (5) liegenden Laderaum (6) fungiert.

## Claims

1. A back-seat bench in a passenger car, comprising a back rest (5) movable in the longitudinal direction (2) of the vehicle relative to the seat upholstery (4) and fastened to an enclosure or lining (14) for the luggage compartment (6) provided behind the back-seat bench (1) and bounded by wall portions (15) fixed to the vehicle body, wherein the lining (14) comprises a rigid floor part (14a) and rigid side parts (14b) which are flush with and at least partly cover the respective immovable wall portions (15), connected to the body, when the back rest (5) is in the position uncovering the seat upholstery (4),
**characterised by** a drive (16), concealed from the luggage compartment (6) by the lining (14), adapted for moving the back rest (5), being in the form of a threaded spindle (16a) or a pigtail driven by a preferably electric auxiliary motor (16c).

2. A back-seat bench according to claim 1, **characterised in that** an adjusting drive (16) is provided on each outer side of the movable back rest (5).

3. A back-seat bench according to claim 2, **characterised in that** the two adjusting drives (16, 16a) are associated with a common auxiliary motor (16c).

4. A back-seat bench according to any of the preceding claims, **characterised by** a locking device for immobilising the movable back rest (5) in both its end positions.

5. A back-seat bench according to any of the preceding claims, **characterised by** a luggage-compartment cover in the form of a roller blind fastened to the back of the back rest (5).

6. A back-seat bench according to any of the preceding claims, **characterised by** a head rest which can be at least partly lowered into the back rest (5) and serves as a wall partitioning off the luggage compartment (6) behind the back rest (5) when the back rest (5) is in the extended position.

## Revendications

1. Banquette arrière d'une voiture particulière avec un dossier (5) déplaçable dans le sens de la longueur du véhicule (2) par rapport au rembourrage de siège (4) et un revêtement du compartiment de chargement (14) fixé à celui-ci pour le compartiment de chargement (6) prévu derrière la banquette arrière (1) et délimité par des sections de paroi non détachables de la carosserie (15), le revêtement du compartiment de chargement (14) étant constitué d'une partie de plancher rigide (14a) ainsi que de parties latérales rigides (14b), qui recouvrent nettement au moins en partie les sections de paroi respectives du compartiment de chargement (15) non déplaçables et non détachables de la carosserie dans la position libérant le rembourrage de siège (4) du dossier (5),
**caractérisé en ce qu'**
une commande de réglage (16) relative au compartiment de chargement (6) couverte par le revêtement du compartiment de chargement (14) pour le mouvement de déplacement du dossier (5), ayant la forme d'une broche filetée (16a) ou d'un flexible de balai, est entraîné(e), de préférence, par un moteur auxiliaire électrique (16c).

2. Banquette arrière selon la revendication 1,
**caractérisée en ce que**
chaque fois une commande de réglage (16) est prévue à l'extérieur de chaque côté du dossier (5) déplaçable.

3. Banquette arrière selon la revendication 2,
**caractérisée en ce qu'**
un moteur auxiliaire (16c) commun est associé aux deux commandes de réglage (16, 16a).

4. Banquette arrière selon l'une quelconque des revendications précédentes,
**caractérisée par**
un dispositif de verrouillage pour bloquer le dossier (5) déplaçable dans ses deux positions finales.

5. Banquette arrière selon l'une quelconque des revendications précédentes,
**caractérisée par**
un revêtement du compartiement de chargement fixé à l'arrière sur le dossier (5) et ayant la forme d'un store.

6. Banquette arrière selon l'une quelconque des revendications précédentes,
**caractérisée en ce qu'**
un dispositif appui-tête escamotable au moins en partie dans le dossier (5), fait office de cloison pour le compartiment de chargement (6) se trouvant derrière le dossier (5) lorsqu'il est sorti du dossier (5).
